# EUROPEAN PATENT APPLICATION

(11) **EP 4 827 157 A1**
(43) Date of publication of application: **21.10.2026**
(21) Application number: 24902545.3
(22) Date of filing: 26.11.2024
(51) Int. Cl.: H04W 24/08

(54) **MEASUREMENT PROCESSING METHOD AND APPARATUS**

(30) Priority: 14.12.2023 CN 202311728046
(71) Applicant: Huawei Technologies Co., Ltd., Shenzhen, Guangdong 518129 (CN)
(72) Inventor: ZHANG, Xiaoyu, Shenzhen, Guangdong 518129 (CN); LIAO, Shuri, Shenzhen, Guangdong 518129 (CN); SHI, Meng, Shenzhen, Guangdong 518129 (CN); YANG, Liu, Shenzhen, Guangdong 518129 (CN); DOU, Shengyue, Shenzhen, Guangdong 518129 (CN)
(74) Representative: Huawei European IPR
(86) International application number: PCT/CN2024/134404
(87) International publication number: WO 2025/124123

(57) **Abstract**

A measurement processing method and apparatus are provided for reducing measurement overhead of user equipment. The method in embodiments of this application includes: receiving a first parameter sent by a first network device, where the first parameter is determined based on first configuration information, the first configuration information is used to configure a synchronization signal block SSB index of a second network device in at least one area, and the at least one area includes a coverage area of the second network device; calculating a measurement start time based on the first parameter, where the measurement start time indicates a time at which user equipment starts measuring a to-be-measured SSB of the second network device; and measuring, by the user equipment, the to-be-measured SSB of the second network device based on the measurement start time.

## Description

This application claims priority to Chinese Patent Application No. 202311728046.0, filed with China National Intellectual Property Administration on December 14, 2023 and entitled "MEASUREMENT PROCESSING METHOD AND APPARATUS", which is incorporated herein by reference in its entirety.

### TECHNICAL FIELD

Embodiments of this application relate to the field of mobile communication, and in particular, to a measurement processing method and apparatus.

### BACKGROUND

A non-terrestrial network (non-terrestrial network, NTN) is a network that provides communication service by using radio frequency resources deployed on platforms such as satellites, unmanned aerial vehicle platforms, or high-altitude platform stations.

In current non-terrestrial networks, when user equipment performs a handover from a serving satellite to a neighboring satellite or performs cell reselection, the user equipment may measure a synchronization signal block (synchronization signal block, SSB) of the neighboring satellite. During the SSB measurement of the neighboring satellite, if the user equipment is located within an overlapping coverage area between the serving satellite and the neighboring satellite, the user equipment needs to measure all SSBs of the neighboring satellite in a full period, to determine the optimal SSB. However, due to the large coverage range of the neighboring satellite and the large quantity of SSB beams in the full period, this results in significant measurement overhead for the user equipment.

### SUMMARY

An embodiment of this application provides a measurement processing method in which user equipment can determine, based on a first parameter sent by a serving satellite, a start time for measuring a synchronization signal block SSB of a neighboring satellite, thereby reducing measurement overhead of the user equipment. Embodiments of this application further provide a measurement processing apparatus, an electronic device, a computer-readable storage medium, and a computer program product corresponding to the measurement processing method.

According to a first aspect, an embodiment of this application provides a measurement processing method. The method may be performed by user equipment, or may be performed by a component of the user equipment, for example, a processor, a chip, or a chip system of the user equipment, or may be implemented by a logical module or software that can implement all or some functions of the user equipment. The method provided in the first aspect includes: The user equipment receives a first parameter sent by a first network device, where the first network device is, for example, a serving satellite, the first parameter includes a synchronization signal block-based measurement timing configuration SMTC parameter, the first parameter is determined based on first configuration information, the first configuration information is used to configure a synchronization signal block SSB index of a second network device in at least one area, the second network device is, for example, a neighboring satellite, and the at least one area includes a coverage area of the second network device. The user equipment calculates a measurement start time based on the first parameter, where the measurement start time indicates a time at which the user equipment starts measuring a to-be-measured SSB of the second network device. When the user equipment is handed over from the first network device to the second network device, the user equipment measures the to-be-measured SSB of the second network device based on the measurement start time.

In this embodiment of this application, the user equipment can determine, based on the first parameter sent by the first network device, the measurement start time for measuring the to-be-measured SSB of the second network device, so that the user equipment only needs to start measuring the to-be-measured SSB of the second network device at the determined measurement start time. This reduces a quantity of to-be-measured SSBs of the second network device that the user equipment needs to measure, and reduces SSB measurement overhead of the user equipment during a handover from the first network device to the second network device.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between the first network device and the second network device.

In this embodiment of this application, the first parameter received by the user equipment includes the offset time, and the user equipment can calculate the measurement start time based on the offset time in the first parameter, thereby improving feasibility of determining the measurement start time by the user equipment, and further reducing measurement overhead of the user equipment.

In a possible implementation, the offset time includes a first offset time. In a process in which the user equipment calculates the measurement start time based on the first parameter, the user equipment determines the measurement start time based on an SSB of the first network device and the first offset time, and the SSB of the first network device is an SSB corresponding to an area in which the user equipment is currently located.

In this embodiment of this application, the user equipment can calculate the measurement start time based on the first offset time by taking, as a reference, the SSB corresponding to the area in which the user equipment is currently located, thereby improving feasibility of determining the measurement start time by the user equipment, and reducing overhead of measuring the to-be-measured SSB of the second network device by the user equipment.

In a possible implementation, the offset time includes a second offset time. In a process in which the user equipment calculates the measurement start time based on the first parameter, the user equipment determines the measurement start time based on a start time of a measurement period and the second offset time. The measurement period is a measurement period shared by the SSB of the first network device and the to-be-measured SSB of the second network device.

In this embodiment of this application, the user equipment can calculate the measurement start time based on the second offset time by taking the start time of the measurement period as a reference, thereby improving feasibility of determining the measurement start time by the user equipment, and reducing overhead of measuring the to-be-measured SSB of the second network device by the user equipment.

According to a second aspect, an embodiment of this application provides a measurement processing method. The method may be performed by a network device, may be performed by a component of the network device, for example, a processor, a chip, or a chip system of the network device, or may be implemented by a logical module or software that can implement all or some functions of the network device. The method provided in the second aspect includes: A first network device obtains a first parameter, where the first network device is, for example, a serving satellite, the first parameter is determined based on first configuration information, the first configuration information is used to configure a synchronization signal block SSB index of a second network device in at least one area, the second network device is, for example, a neighboring satellite, and the at least one area includes a coverage area of the second network device. The first network device sends a first parameter to user equipment, where the first parameter is used to determine a measurement start time for measuring a to-be-measured synchronization signal block SSB of the second network device.

In this embodiment of this application, the first network device can obtain the first parameter by interacting with the second network device, and send the first parameter to the user equipment, so that the user equipment calculates the measurement start time based on the first parameter, and needs to start measuring the to-be-measured SSB of the second network device only at the measurement start time. This reduces a quantity of to-be-measured SSBs of the second network device that the user equipment needs to measure, and reduces SSB measurement overhead of the user equipment during a handover from the first network device to the second network device.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between the first network device and the second network device.

In this embodiment of this application, the first configuration information of the neighboring satellite may alternatively be a beam footprint number of the overlapping coverage area between the first network device and the second network device, and a mapping relationship between the beam footprint number and an SSB index of the second network device, so that the first network device does not need to determine the overlapping coverage area between the first network device and the second network device, thereby improving efficiency of obtaining the first parameter by the first network device based on the first configuration information.

In a possible implementation, in a process in which the first network device obtains the first parameter, the first network device receives the first configuration information sent by the second network device, and the first network device determines the first parameter based on the first configuration information. Specifically, the first network device determines a beam footprint number corresponding to a position area of the user equipment, and determines, based on the beam footprint number, an SSB index of the second network device corresponding to the position area of the user. The first network device determines the SSB index and an SSB index adjacent to the SSB index as to-be-measured SSBs. The first network device determines the first parameter based on an SSB index of the first network device corresponding to the user equipment and the to-be-measured SSB index of the second network device.

In this embodiment of this application, the first network device can calculate the first parameter based on the first configuration information sent by the second network device, thereby improving feasibility of obtaining the first parameter by the first network device. In addition, the first network device can calculate the first parameter through only one interaction with the second network device, thereby improving interaction efficiency between the first network device and the second network device.

In a possible implementation, in a process in which the first network device obtains the first parameter, the first network device receives the first parameter sent by the second network device, that is, the second network device can calculate the first parameter, and the first network device can directly obtain the first parameter from the second network device.

In this embodiment of this application, the first network device directly receives the first parameter sent by the second network device, thereby improving feasibility of obtaining the first parameter by the first network device.

In a possible implementation, before the first network device receives the first parameter sent by the second network device, the first network device sends second configuration information to the second network device, where the second configuration information is used to determine the first parameter, and the second configuration information includes a beam footprint number of an area covered by the first network device, and a mapping relationship between the beam footprint number of the area covered by the first network device and an SSB index of the first network device.

In this embodiment of this application, the second network device can calculate the first parameter based on the second configuration information sent by the first network device, and directly send the first parameter to the first network device, thereby improving accuracy of the first parameter.

In a possible implementation, when the first configuration information changes, the first network device updates the first parameter based on first configuration information, and sends the updated first parameter to the user equipment.

In this embodiment of this application, the first network device can update the first parameter based on changed configuration information, thereby improving accuracy of the first parameter, and further improving accuracy of the measurement start time determined by the user equipment.

In a possible implementation, when the second configuration information changes, the first network device sends the changed second configuration information to the second network device. The second network device updates the first parameter based on the changed second configuration information, and sends the updated first parameter to the first network device.

In this embodiment of this application, the first network device can send the changed second configuration information to the second network device, so that the second network device can calculate the first parameter based on the changed second configuration information, thereby improving accuracy of the first parameter, and further improving accuracy of the measurement start time determined by the user equipment.

According to a third aspect, an embodiment of this application provides a measurement processing apparatus. The measurement processing apparatus is applied to user equipment, and the measurement apparatus includes a transceiver unit and a processing unit. The transceiver unit is configured to receive a first parameter sent by a first network device, the first parameter is determined based on first configuration information, the first configuration information is used to configure a synchronization signal block SSB index of a second network device in at least one area, and the at least one area includes a coverage area of the second network device. The processing unit is configured to calculate a measurement start time based on the first parameter, and the measurement start time indicates a time at which the user equipment starts measuring a to-be-measured SSB of the second network device. The processing unit is further configured to measure the to-be-measured SSB of the second network device based on the measurement start time.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between the first network device and the second network device.

In a possible implementation, the offset time includes a first offset time, the processing unit is specifically configured to determine the measurement start time based on an SSB of the first network device and the first offset time, and the SSB of the first network device is an SSB corresponding to an area in which the user equipment is currently located.

In a possible implementation, the offset time includes a second offset time, the processing unit is specifically configured to determine the measurement start time based on a start time of a measurement period and the second offset time, and the measurement period is a measurement period shared by an SSB of the first network device and the to-be-measured SSB of the second network device.

According to a fourth aspect, an embodiment of this application provides a measurement processing apparatus. The measurement processing apparatus is applied to a network device, and the measurement processing apparatus includes an obtaining unit, a transceiver unit, and a processing unit. The obtaining unit is configured to obtain a first parameter, the first parameter is determined based on first configuration information, the first configuration information is used to configure a synchronization signal block SSB index of a second network device in at least one area, and the at least one area includes a coverage area of the second network device. The transceiver unit is configured to send the first parameter to user equipment, and the first parameter is used to determine a measurement start time for measuring a to-be-measured synchronization signal block SSB of the second network device.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between a first network device and the second network device.

In a possible implementation, the obtaining unit is specifically configured to receive the first configuration information sent by the second network device, and determine the first parameter based on the first configuration information.

In a possible implementation, the obtaining unit is specifically configured to receive the first parameter sent by the second network device.

In a possible implementation, the transceiver unit is further configured to send second configuration information to the second network device, the second configuration information is used to determine the first parameter, and the second configuration information includes a beam footprint number of an area covered by the first network device, and a mapping relationship between the beam footprint number of the area covered by the first network device and an SSB index of the first network device.

In a possible implementation, the processing unit is further configured to: when the first configuration information changes, update the first parameter based on the first configuration information, and the transceiver unit is further configured to send the updated first parameter to the user equipment.

According to a fifth aspect, an embodiment of this application provides an electronic device. The electronic device includes a processor, the processor is coupled to a memory, the processor is configured to store instructions, and when the instructions are executed by the processor, the electronic device is enabled to perform the method according to any one of the first aspect or the possible implementations of the first aspect, or the electronic device is enabled to perform the method according to any one of the second aspect or the possible implementations of the second aspect.

According to a sixth aspect, an embodiment of this application provides a computer-readable storage medium. The computer-readable storage medium stores instructions, and when the instructions are executed, a computer is enabled to perform the method according to any one of the first aspect or the possible implementations of the first aspect, or a computer is enabled to perform the method according to any one of the second aspect or the possible implementations of the second aspect.

According to a seventh aspect, an embodiment of this application provides a computer program product. The computer program product includes instructions, and when the instructions are executed, a computer is enabled to perform the method according to any one of the first aspect or the possible implementations of the first aspect, or a computer is enabled to perform the method according to any one of the second aspect or the possible implementations of the second aspect.

It may be understood that, for beneficial effect that can be achieved by any one of the measurement processing apparatus, the electronic device, the computer-readable medium, the computer program product, or the like provided above, refer to beneficial effect in the corresponding method. Details are not described herein again.

### BRIEF DESCRIPTION OF DRAWINGS

FIG. 1a is a diagram of a system architecture of a measurement processing system according to an embodiment of this application;
FIG. 1b is a diagram of an application scenario of a measurement processing system according to an embodiment of this application;
FIG. 2a is a schematic flowchart of a measurement processing method according to an embodiment of this application;
FIG. 2b is a diagram of a beam footprint number and an SSB pattern according to an embodiment of this application;
FIG. 2c is a diagram of an overlapping coverage area between satellites according to an embodiment of this application;
FIG. 3a is a schematic flowchart of obtaining a first parameter according to an embodiment of this application;
FIG. 3b is a diagram of another overlapping coverage area between satellites according to an embodiment of this application;
FIG. 3c is a diagram of calculating an offset time according to an embodiment of this application;
FIG. 4 is another schematic flowchart of obtaining a first parameter according to an embodiment of this application;
FIG. 5 is a diagram of configuration information change according to an embodiment of this application;
FIG. 6 is a diagram of a structure of a measurement processing apparatus according to an embodiment of this application;
FIG. 7 is a diagram of a structure of another measurement processing apparatus according to an embodiment of this application; and
FIG. 8 is a diagram of a structure of an electronic device according to an embodiment of this application.

### DESCRIPTION OF EMBODIMENTS

Embodiments of this application provide a measurement information processing method and apparatus for reducing measurement overhead of measuring a synchronization signal block by user equipment.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way is interchangeable in proper circumstances so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, the words such as "example" or "for example" are used to present related concepts in a specific manner.

First, some terms in embodiments of this application are described, to help a person skilled in the art understand the technical solutions.

A synchronization signal block (Synchronization Signal Block, SSB) refers to a signal having a specific structure in a frequency domain segment, and is used by user equipment to synchronize with and locate a base station at a physical layer. Each base station has unique identification information in the SSB. The user equipment may detect and identify a nearby base station by decoding the identification information of the SSB, perform time synchronization by using the SSB, and select a suitable cell for connection.

A synchronization signal block-based measurement timing configuration (SSB-based measurement timing configuration, SMTC) refers to a configuration manner for performing measurement and timing by using a synchronization signal block. The user equipment can implement effective measurement and timing of an SSB signal of a surrounding cell by properly configuring an SMTC parameter, so that the user equipment selects a suitable cell for access.

To make the technical solutions of this application clearer and easier to understand, the following describes a system architecture of this application with reference to the accompanying drawings.

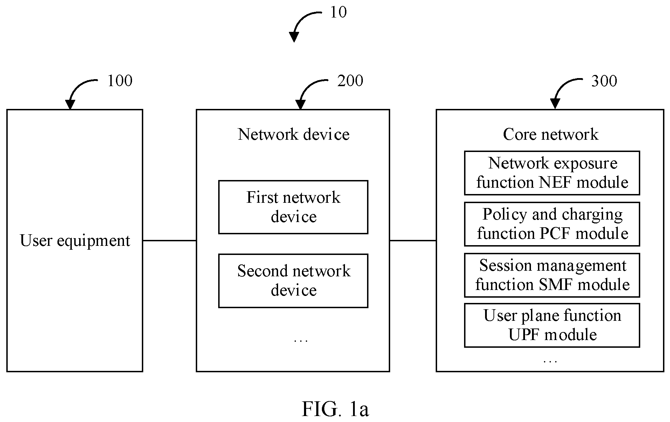

FIG. 1a is a diagram of a system architecture of a measurement processing system according to an embodiment of this application. In an example shown in FIG. 1a, a measurement processing system 10 is a non-terrestrial network system, and the measurement processing system 10 includes user equipment 100, a network device 200, and a core network 300. The following describes specific functions of each part of the measurement processing system 10.

The user equipment 100 is a mobile communication device used by an end user, and is also referred to as a terminal device. The user equipment 100 has a wireless transceiver function, and is configured to communicate with the network device 200. The user equipment 100 may be a mobile phone, a tablet computer, a computing device with a wireless transceiver function, a virtual reality (virtual reality, VR) device, an augmented reality (augmented reality, AR) device, an in-vehicle device, or the like. The user equipment 100 may alternatively be a wireless terminal in industrial control, a wireless terminal in remote medical, a wireless terminal in a smart grid, a wireless terminal in transportation safety, a wireless terminal in a smart city, a wireless terminal in a smart home, or the like.

A deployment manner of the user equipment 100 is not limited in this embodiment of this application. The user equipment 100 may be deployed on land, including indoor or outdoor, handheld, wearable, in-vehicle, or the like, or may be deployed on water, for example, a terminal device on a ship, or may be deployed in the air, for example, a terminal device in an unmanned aerial vehicle and a terminal device in a balloon.

The network device 200 may be a device having a wireless transceiver function. The network device 200 is configured to provide wireless coverage for the user equipment 100, and connect the user equipment 100 to the core network 303. The network device 200 may be a base station in a non-terrestrial network, for example, the following carried on a satellite: an evolved base station in LTE, a base station or a transceiver point in 5G NR, or a base station subsequently evolved in 3GPP, including a macro base station, a micro base station, a pico base station, a small cell, or a relay station. The network device 200 may alternatively be a wireless access node, a wireless relay node, a wireless backhaul node, or the like in a Wi-Fi system.

In this embodiment of this application, the network device 200 includes a first network device and a second network device. The first network device is a network device that has established a connection to the user equipment 100. The second network device is a network device on which the user equipment needs to perform a synchronization signal block measurement to hand over from the first network device. When the network device 200 is a satellite base station, the first network device is a serving satellite, and the second network device is a neighboring satellite. The serving satellite is a satellite that is providing a service for the user equipment 100, and is also referred to as a local satellite. The neighboring satellite is a satellite adjacent to the serving satellite, and is also referred to as a neighbor satellite.

The satellite in this embodiment of this application may be a low earth orbit (low earth orbit, LEO) satellite, a medium earth orbit (medium earth orbit, MEO) satellite, or a geostationary earth orbit (geostationary earth orbit, GEO) satellite. This is not specifically limited.

It may be understood that, in addition to being a satellite base station, the network device 200 may alternatively be a balloon station, an unmanned aerial vehicle (unmanned aerial vehicle, UAV) platform, a high altitude platform station (high altitude platform station, HAPS), or the like. This is not specifically limited.

The core network 300 is configured to be responsible for processing and managing core functions and services in a mobile communication system, including completing functions such as registration, connection, and session management. The core network 300 includes modules such as a network exposure function (network exposure function, NEF) module, a policy and charging function (policy and charging function, PCF) module, a session management function (session management function, SMF) module, and a user plane function (user plane function, UPF) module.

The network exposure function NEF module is configured to expose a service and a capability of a 3GPP network function to an application function (application function, AF), and may further enable the AF to provide information for the 3GPP network function. The policy and charging function PCF module is configured to perform policy management on a charging policy and a quality of service QoS policy. The session management function SMF module is configured to complete session management functions such as IP address allocation, UPF selection, and charging and quality of service QoS policy control for the user equipment. The user plane function UPF module is configured to forward specific data on a user plane and generate a call detail record based on a traffic condition.

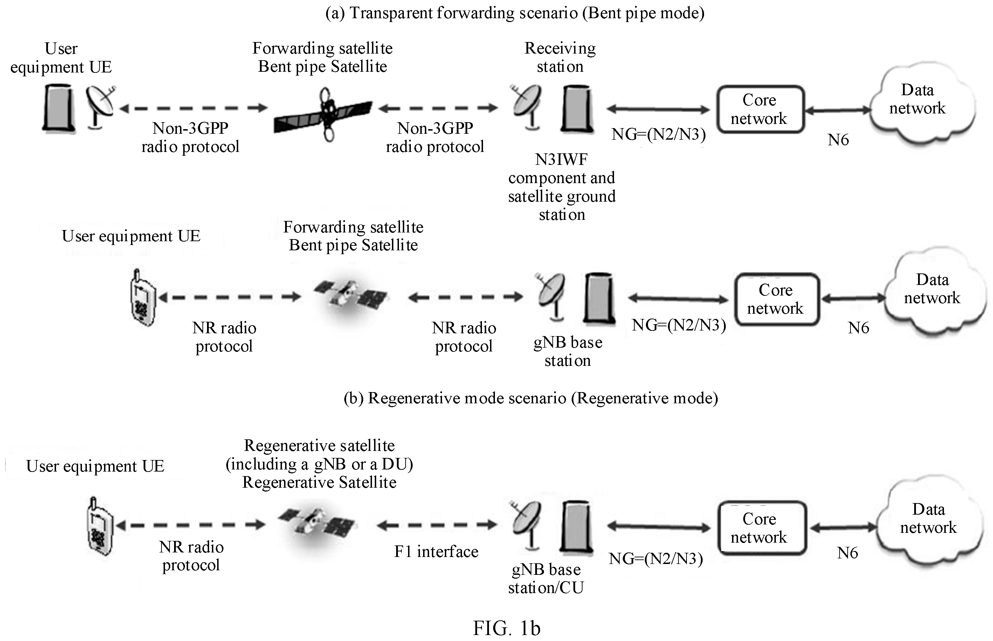

FIG. 1b is a diagram of an application scenario of a measurement processing method according to an embodiment of this application. In an example shown in FIG. 1b, an application scenario of the measurement processing system 10 includes a transparent forwarding scenario and a regenerative mode scenario. In the transparent forwarding scenario, the network device 200 plays a role of frequency conversion forwarding, that is, the network device 200 amplifies and forwards a received signal without performing any processing or decoding on the signal. For example, in an example transparent forwarding scenario shown in (a) of FIG. 1b, the satellite receives a radio frequency signal from user equipment of a ground station, and directly forwards the radio frequency signal to a ground receiving station by using the satellite without performing any processing or operation on the signal. The ground receiving station includes a non-3GPP interworking function (Non-3GPP InterWorking Function, N3IWF) component, a satellite ground station, and a gNB base station. The N3IWF component is configured to manage a connection between an access network and a core network. The satellite may forward the radio frequency signal based on a plurality of radio protocols, for example, forward the radio frequency signal based on a non-3GPP radio protocol or an NR radio protocol. This is not specifically limited.

In the regenerative mode scenario, after receiving a signal, the network device 200 decodes, processes, and re-encodes the signal, and then transmits a signal. In this case, the network device 200 includes a gNB device or a digital processing unit (digital processing unit, DU). For example, in an example regenerative mode scenario shown in (b) of FIG. 1b, the satellite receives a radio frequency signal from ground user equipment, and then performs processing such as demodulation, denoising, and bit error correction on the radio frequency signal, and regenerates a compensation signal. Then, the compensation signal is retransmitted by the satellite to a ground receiving station through an F1 interface, and the ground receiving station includes a gNB base station or a central unit (central unit, CU). The F1 interface is a protocol interface based on an internet protocol (internet protocol, IP). The F1 interface usually uses a physical layer protocol of a satellite link as a transmission medium, for example, a Ka-band or Ku-band satellite signal.

In the examples shown in (a) of FIG. 1b and (b) of FIG. 1b, an NG interface is an information exchange interface between the ground receiving station and the core network, and the NG interface includes an N2 interface and an N3 interface. The N2 interface is a control plane interface, and the N3 interface is a user plane interface. An N6 interface is an interface between the core network and a data network.

Based on the measurement processing system 10 shown in FIG. 1a, this application further provides a measurement processing method. The following describes, with reference to embodiments, the measurement processing method provided in an embodiment of this application.

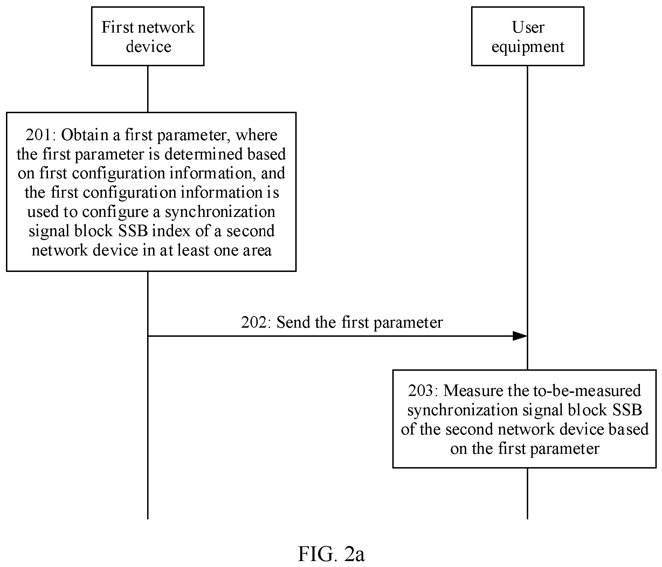

FIG. 2a is a schematic flowchart of a measurement information exchange method according to an embodiment of this application. In an example shown in FIG. 2a, the method includes the following steps.

201: A first network device obtains a first parameter, where the first parameter is determined based on first configuration information, and the first configuration information is used to configure a synchronization signal block SSB index of a second network device in at least one area.

The first network device obtains the first parameter. The first parameter includes a synchronization signal block-based measurement timing configuration SMTC4 parameter, and the SMTC4 parameter is used to determine a start time of measuring a synchronization signal block SSB by user equipment. The first parameter is determined based on the first configuration information, the first configuration information indicates a configuration of the synchronization signal block SSB index of the second network device in the at least one area, and the at least one area includes a coverage area of the second network device.

It should be noted that the SMTC4 parameter is a measurement timing configuration parameter defined in a new radio NR protocol. The NR protocol defines four measurement timing configuration parameters, including an SMTC1 parameter, an SMTC2 parameter, an SMTC3 parameter, and the SMTC4 parameter. The SMTC1 parameter is a primary measurement timing configuration parameter, and includes periodicity (periodicity), an offset (offset) time, and duration (duration). The periodicity is used to determine a frequency of measuring a synchronization signal block SSB by user equipment, the offset time is used to determine a position of a start time at which the user equipment measures an SSB, and the duration is used to determine a time window length of measuring the SSB by the user equipment.

The SMTC2 parameter is a secondary measurement timing configuration parameter. The SMTC2 parameter mainly includes a cell list (pci-list) and periodicity. Compared with the SMTC1 parameter, the SMTC2 parameter is a measurement timing configuration parameter for performing SSB measurement for a specific cell. The periodicity in the SMTC2 parameter is usually shorter than the periodicity in the SMTC1 parameter, and the SMTC2 parameter and the SMTC1 parameter share a same offset time and duration.

The SMTC3 parameter is a measurement timing configuration parameter applied in an integrated access and backhaul (integrated access and backhaul, IAB) scenario. The SMTC3 parameter is configured with periodicity, an offset time, duration, and a cell list independently. The SMTC3 parameter specifies a to-be-measured SSB index.

The SMTC4 parameter is a measurement timing configuration parameter applied in a non-terrestrial network NTN scenario. In the NTN scenario, delays of arrival of different network devices (for example, satellites) at the user equipment are different. If the first network device and the second network device use a same offset time configuration, an SSB of the second network device is possibly not measured within configured duration, and consequently, measurement fails.

In this case, the SMTC4 parameter mainly includes a physical cell identifier PCI list and an offset time. The physical cell identifier PCI list is used to determine a cell in which the user equipment performs SSB measurement, and each physical cell identifier PCI list is corresponding to one type of offset time. The SMTC4 parameter may be configured with three physical cell identifier PCI lists.

In comparison with the SMTC1 parameter, for the SMTC4 parameter, a network device side may calculate arrival delays of SSBs of different network devices based on positions of the network devices (for example, satellites) and a position of the user equipment. A corresponding PCI list and offset time are configured in the SMTC4 parameter, to ensure that an SSB of the network device can be detected by the user equipment at a corresponding time position. The SMTC4 parameter and the SMTC1 parameter share the periodicity and the duration.

In an example of step 201, when the first network device is a serving satellite, and the second network device is a neighboring satellite, the serving satellite obtains the first parameter, where the first parameter is used by user equipment 100 located in an overlapping coverage area between two satellites to determine a measurement start time of an SSB of the neighboring satellite. The first parameter is determined by the serving satellite based on first configuration information of the neighboring satellite, the first configuration information indicates a synchronization signal block SSB index of the neighboring satellite in at least one area, and the at least one area includes a coverage area of the second network device. The first configuration information includes a beam footprint number of the at least one area, and a mapping relationship between the beam footprint number and an SSB index of the second network device.

In a possible implementation, the first parameter includes a physical cell identifier (physical cell ID, PCI) and an offset time. The physical cell identifier PCI is an identifier for identifying different physical cells in an LTE or 5G network, and the offset time is used to determine a measurement start time for measuring a to-be-measured SSB of the second network device.

It should be noted that a beam footprint is a position and a range of a satellite beam on a ground, and is a minimum unit for dividing a beam coverage range on the ground in satellite communication. One beam footprint is corresponding to a coverage range on the ground, and a size of the beam footprint is related to a beam width of a used beam. For a broadcast beam, a size of one beam footprint may be the same as a coverage range of one SSB beam on the ground.

A beam footprint number represents an identifier of each beam footprint, and an SSB index represents a number of a synchronization signal block. A physical cell is a basic unit that provides a communication service in a specific area. One physical cell possibly includes a plurality of beams in different directions, that is, may cover a plurality of beam footprints. As a satellite moves, one same satellite physical cell covers beam footprints with different numbers at different times.

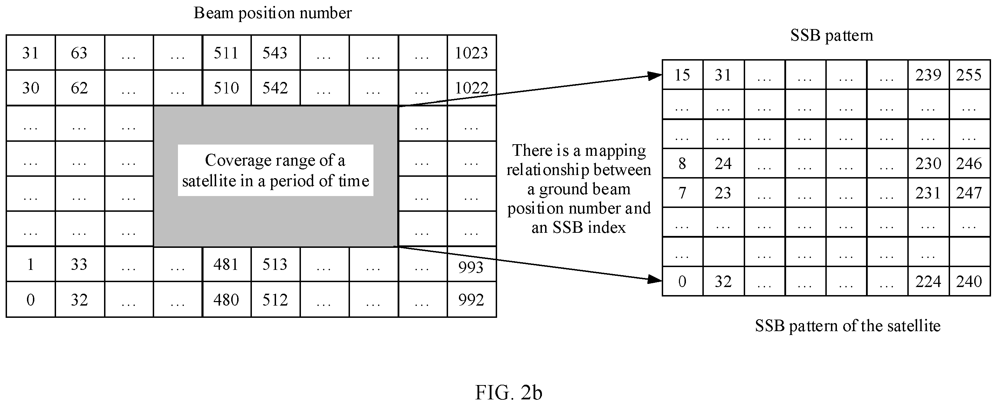

FIG. 2b is a diagram of a relationship between a beam footprint number and an SSB index according to an embodiment of this application. In an example shown in FIG. 2b, a ground operation control center may divide an overall ground range covered by the satellite into several areas of a fixed size, each area is referred to as one beam footprint, and all beam footprints are assigned with unique numbers. A size of each beam footprint may be set to be the same as a coverage size of an SSB beam, to facilitate periodic scanning by the satellite. A specific position and number of each beam footprint may be preset in the satellite and a chip of the user equipment, or periodically delivered by the operation control center and a core network.

In the example shown in FIG. 2b, in a period of time, one satellite covers a same quantity of ground beam footprints as SSB beams. In this case, there is a one-to-one mapping relationship between an SSB index and a ground beam number. As the satellite moves, the mapping relationship also changes. A coverage range of the satellite in a period of time includes an SSB index arrangement of the satellite, and the SSB index arrangement of the coverage range of the satellite is also referred to as an SSB pattern of the satellite.

In a possible implementation, the first configuration information includes the beam footprint number of the at least one area, and the mapping relationship between the beam footprint number and an SSB index of the second network device, and the at least one area further includes an overlapping coverage area between the first network device and the second network device. In other words, the second network device may determine the overlapping coverage area in advance, and send, to the first network device, a beam footprint number of the overlapping coverage area and the mapping relationship between the beam footprint number and an SSB index of the second network device.

In a possible implementation, the beam footprint number may alternatively be position coordinates of a beam center point. Then, a range of a beam footprint may be determined based on the coordinates of the beam center point and a beam coverage range. In this case, the first configuration information includes position coordinates of a beam footprint center of the at least one area and a mapping relationship between position coordinates of a beam footprint center and an SSB index of the second network device.

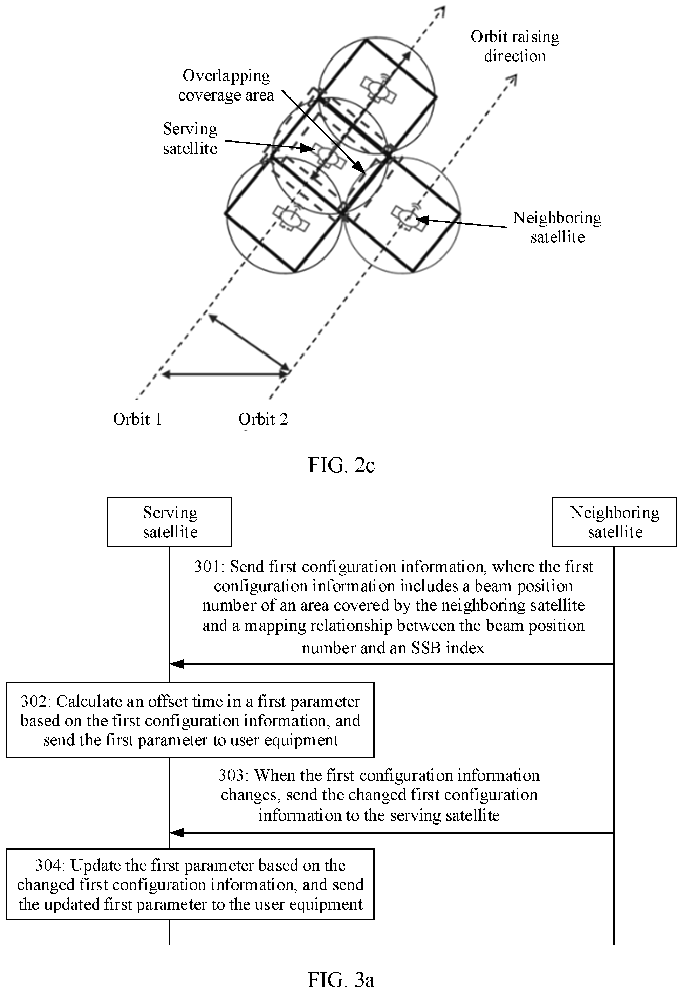

FIG. 2c is a diagram of an overlapping coverage area between satellites according to an embodiment of this application. In an example shown in FIG. 2c, the first network device is a serving satellite, the second network device is a neighboring satellite, and there is an overlapping coverage area between the serving satellite and the neighboring satellite. When the user equipment is located in the overlapping coverage area, the user equipment needs to measure an SSB index of the neighboring satellite.

In this embodiment of this application, the first network device may obtain the first parameter in a plurality of manners, including: The first network device determines the first parameter based on the first configuration information sent by the second network device, or the first network device receives the first parameter sent by the second network device. The following separately describes the foregoing two manners in which the first network device obtains the first parameter.

In a first manner of obtaining the first parameter, the first network device receives the first configuration information sent by the second network device, and the first network device determines the first parameter based on the first configuration information. Specifically, the first network device determines the overlapping coverage area based on the coverage area of the second network device and a coverage area of the first network device, and determines the beam footprint number corresponding to the overlapping coverage area and an SSB index corresponding to the beam footprint number.

When the user equipment 100 is located in the overlapping coverage area, the first network device determines a beam footprint number corresponding to a position of the user equipment 100, and determines an SSB index of the second network device corresponding to the beam footprint number, namely, an SSB index of the second network device corresponding to the user equipment 100.

Then, the first network device determines the SSB index of the second network device corresponding to the user equipment 100 and one or more SSB indexes adjacent to the SSB index as the to-be-measured SSB of the second network device. The first network device obtains the offset time through calculation based on the to-be-measured SSB of the second network device. There are two manners for calculating the offset time, which are respectively described in the following:

In a first calculation manner, the offset time is calculated by taking an SSB of the first network device corresponding to the user equipment 100 as a reference. In this case, the offset time is defined as a time difference between the to-be-measured SSB of the second network device and the SSB of the first network device corresponding to the user equipment 100. This offset time is referred to as a first offset time.

In a second calculation manner, the offset time is calculated by taking a start time of a measurement period of the user equipment 100 as a reference. In this case, the offset time is defined as a time difference between the to-be-measured SSB of the second network device and the start time of the measurement period of the user equipment 100. This offset time is referred to as a second offset time.

FIG. 3a is a schematic flowchart of obtaining a first parameter by a first network device according to an embodiment of this application. In an example shown in FIG. 3a, for example, the first network device is a serving satellite, and for example, the second network device is a neighboring satellite. In step 301 and step 302 in which the serving satellite obtains a first parameter, the serving satellite receives first configuration information sent by the neighboring satellite, where the first configuration information includes a beam footprint number of an area covered by the neighboring satellite and an SSB index of the neighboring satellite corresponding to the beam footprint number; and the serving satellite calculates the first parameter based on the first configuration information, where the first parameter includes an offset time.

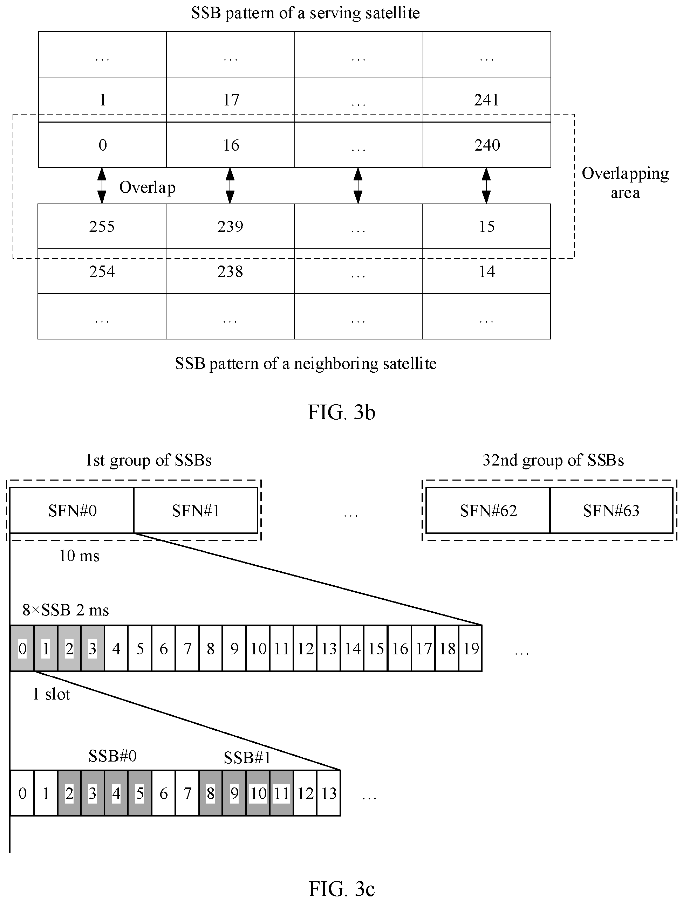

FIG. 3b is a diagram of SSB patterns of a serving satellite and a neighboring satellite in an overlapping coverage area according to an embodiment of this application. In an example shown in FIG. 3b, SSB indexes of the serving satellite in the overlapping area include SSB#0, SSB#16, ..., and SSB#240, and SSB indexes of the neighboring satellite in the overlapping area include SSB#255, SSB#239, ..., and SSB#15. SSB#0 of the serving satellite overlaps SSB#255 of the neighboring satellite; SSB#16 of the serving satellite overlaps SSB#239 of the neighboring satellite; and SSB#240 of the serving satellite overlaps SSB#15 of the neighboring satellite.

In the example shown in FIG. 3b, the first configuration information includes a beam footprint number of an area covered by the neighboring satellite and an SSB index of the neighboring satellite corresponding to the beam footprint number. For example, a mapping relationship between a beam footprint number and an SSB index of the neighboring satellite is shown in Table 1.

**Table 1**

| Beam footprint number | SSB index of a neighboring satellite |
|---|---|
| A1 | 255 |
| A2 | 239 |
| A3 | 223 |
| ... | ... |

In the example shown in FIG. 3b, in a process in which the serving satellite calculates the first parameter based on the first configuration information, the serving satellite may determine the overlapping coverage area based on a coverage range of an SSB of the neighboring satellite and a coverage range of an SSB of the serving satellite, and the beam footprint number of the overlapping coverage area. When the user equipment is located in the overlapping coverage area, and needs to measure the SSB of the neighboring satellite, the serving satellite first determines, based on an SSB index of the serving satellite currently corresponding to the user equipment, a beam footprint number corresponding to the user equipment, and then determines, based on the beam footprint number, an SSB index of the neighboring satellite. For example, an SSB index of the serving satellite corresponding to the user equipment is SSB#16, a beam footprint number corresponding to the serving satellite of an SSB index SSB#16, is A2, and an SSB index of the neighboring satellite corresponding to the beam footprint number A2 is SSB#239. In this case, SSB#239 is a to-be-measured SSB of the neighboring satellite.

In the example shown in FIG. 3b, in consideration of movement of the neighboring satellite and the user equipment and impact of the earth rotation, after entering a coverage range of the neighboring satellite, the user equipment needs to measure SSB#239 and surrounding SSBs around SSB#239. It may be learned from the SSB pattern of the neighboring satellite that SSB indexes adjacent to SSB#239 of the neighboring satellite include SSB#223, SSB#238, and SSB#255. In this case, when the user equipment is located in a coverage range of SSB#16 of the serving satellite, SSBs of the neighboring satellite that need to be measured by the user equipment include SSB#{223, 238, 239, 255}.

FIG. 3c is a diagram of calculating an offset time according to an embodiment of this application. In an example shown in FIG. 3c, the neighboring satellite sends 256 SSBs in each measurement period, the 256 SSBs are divided into 32 groups in total for sending, every eight SSBs form one group, one group lasts for 20 ms, and the 256 SSBs last for 640 ms in total. After the serving satellite determines that the to-be-measured SSB of the neighboring satellite is SSB#{223, 238, 239, 255}, the serving satellite calculates the offset time based on the to-be-measured SSB of the neighboring satellite. The to-be-measured SSB#223 of the neighboring satellite is used as an example. SSB#223 is an SSB in a 27th group. In this case, a sending start time corresponding to the group in which the to-be-measured SSB#223 is located is 540 ms. Correspondingly, SSB#238 and SSB#239 are SSBs in a 29th group, and a sending start time corresponding to the group in which the to-be-measured SSB#238 and SSB#239 are located is 580 ms. SSB255 is located is 620 ms.

Still referring to FIG. 3b, in the example shown in FIG. 3b, the foregoing first offset time calculation manner is used as an example. The offset time is calculated by taking a time of SSB#16 corresponding to the user equipment as a reference, that is, taking a 40th ms after a second group of SSBs is sent as a reference, and a calculated offset time corresponding to the to-be-measured SSB#223 is 500 ms. Correspondingly, an offset time corresponding to the to-be-measured SSB#238 and SSB#239 is 540 ms, and an offset time corresponding to the to-be-measured SSB#255 is 580 ms.

In the example shown in FIG. 3b, the foregoing second offset time calculation manner is used as an example. The offset time is calculated by taking the start time of the measurement period as a reference, that is, by taking 0 ms at the beginning of the measurement period as a reference. In this case, a calculated offset time corresponding to the to-be-measured SSB#223 is 540 ms. Correspondingly, an offset time corresponding to the to-be-measured SSB#238 and SSB#239 is 580 ms. An offset time corresponding to the to-be-measured SSB#255 is 620 ms.

The following describes a second manner of obtaining the first parameter.

In the second manner of obtaining the first parameter, the first network device receives the first parameter sent by the second network device. Specifically, the first network device sends second configuration information to the second network device, where the second configuration information includes a beam footprint number of an area covered by the first network device, and a mapping relationship between the beam footprint number and an SSB index of the first network device. The second network device determines the first parameter based on the first configuration information and the second configuration information.

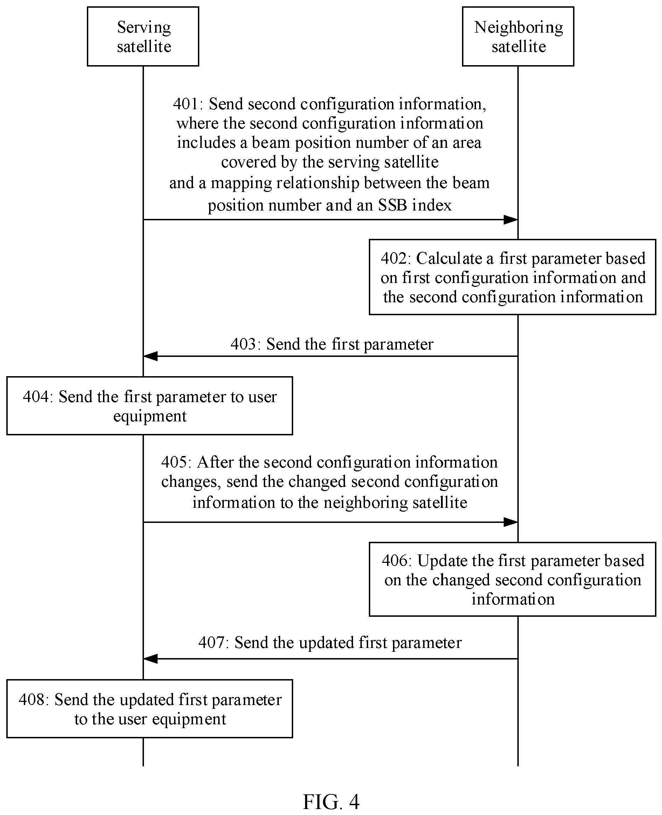

FIG. 4 is another schematic flowchart of obtaining a first parameter by a first network device according to an embodiment of this application. In an example shown in FIG. 4, for example, the first network device is a serving satellite, and for example, the second network device is a neighboring satellite. In step 401 to step 404 in which the serving satellite obtains a first parameter, the serving satellite sends second configuration information to the neighboring satellite, where the second configuration information includes a beam footprint number of an area covered by the serving satellite and an SSB index of the serving satellite corresponding to the beam footprint number; and the neighboring satellite calculates the first parameter based on first configuration information and the second configuration information, where the first parameter includes an offset time.

In the example shown in FIG. 4, a calculation process of the first parameter is completed in the neighboring satellite. After the serving satellite sends the second configuration information to the neighboring satellite, during the calculation of the first parameter by the neighboring satellite based on the second configuration information, the neighboring satellite may determine an overlapping coverage area and a beam footprint number of the overlapping coverage area based on a coverage range of an SSB of the serving satellite and a coverage range of an SSB of the neighboring satellite.

When the user equipment is located in the overlapping coverage area and needs to measure the SSB of the neighboring satellite, the serving satellite first determines, based on an area in which the user equipment is located, an SSB index of the serving satellite corresponding to the user equipment and a beam footprint number corresponding to the SSB index, and the neighboring satellite determines, based on the beam footprint number, an SSB index of the neighboring satellite corresponding to the user equipment. Further, the neighboring satellite determines, based on the SSB index of the neighboring satellite corresponding to the user equipment, a plurality of SSBs adjacent to the SSB index, and uses the plurality of SSBs as to-be-measured SSBs of the neighboring satellite.

In the example shown in FIG. 4, after determining the to-be-measured SSBs, the neighboring satellite calculates offset times based on the to-be-measured SSBs of the neighboring satellite, and the neighboring satellite calculates the offset time based on each to-be-measured SSB. A manner in which the neighboring satellite calculates the offset time based on the to-be-measured SSB is consistent with a manner in which the serving satellite calculates the offset time based on the to-be-measured SSB in the embodiment shown in FIG. 3b. Details are not described again.

In a possible implementation, when the first configuration information changes, the first network device updates the first parameter based on changed first configuration information, and sends the updated first parameter to the user equipment.

Still referring to FIG. 3a, in step 303 and step 304 in the example shown in FIG. 3a, when the first configuration information of the neighboring satellite changes, the neighboring satellite sends changed first configuration information to the serving satellite, and the serving satellite updates the first parameter based on the changed first configuration information, and sends the updated first parameter to the user equipment.

In a possible implementation, when the second configuration information changes, the first network device sends the changed second configuration information to the second network device. The second network device updates the first parameter based on the changed second configuration information, and sends the updated first parameter to the first network device. After receiving the updated first parameter, the first network device sends the updated first parameter to the user equipment.

Still referring to FIG. 4, in step 405 to step 408 in the example shown in FIG. 4, when the second configuration information of the serving satellite changes, the serving satellite sends the changed second configuration information to the neighboring satellite, and the neighboring satellite updates the first parameter based on the changed second configuration information, and sends the updated first parameter to the serving satellite. After receiving the updated first parameter, the serving satellite sends the updated first parameter to the user equipment.

The following specifically describes a manner of updating configuration information in this embodiment of this application. Because a coverage area of a satellite changes as the satellite moves, that is, an SSB pattern of the satellite changes as the satellite moves. There are two manners in which the SSB pattern changes with the satellite, which are respectively described in the following:

In a first change manner of the SSB pattern, the SSB pattern of the satellite is bound to the ground. After the satellite moves, only an edge part of the SSB pattern of the satellite changes, and an SSB index corresponding to the user equipment does not change provided that the user equipment is within the coverage range of the satellite. Therefore, in this case, the satellite does not need to update the mapping relationship between a beam footprint number and an SSB index.

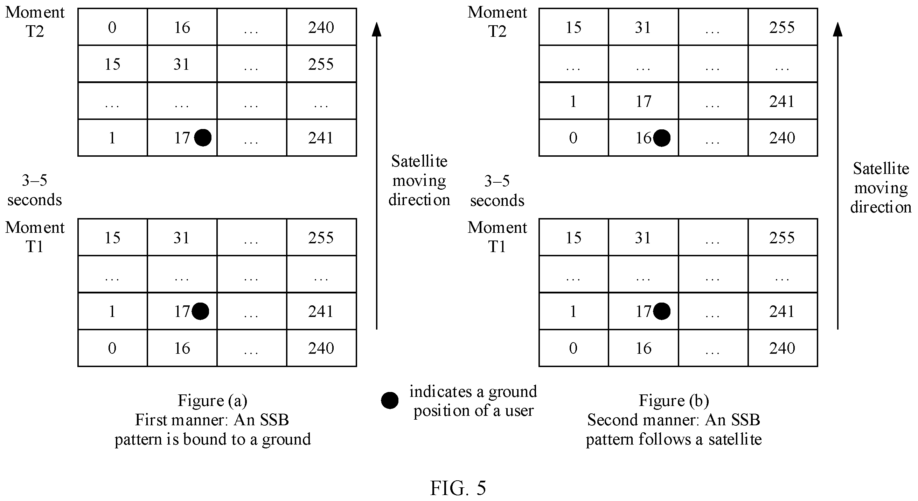

FIG. 5 is a diagram of a position relationship between user equipment and an SSB pattern according to an embodiment of this application. In an example figure (a) shown in FIG. 5, the SSB pattern of a satellite is bound to the ground. As the satellite moves, only the user equipment is within the coverage range of the satellite, and an SSB index corresponding to a position of the user equipment does not change. For example, at a moment t1, an SSB index corresponding to a position of the user equipment is SSB#17. When the satellite moves, at a moment t2, an SSB index corresponding to a position of the user equipment is still SSB#17.

In a second change manner of the SSB pattern, the SSB index of the satellite is not bound to the ground. After the satellite moves, a complete SSB pattern of the satellite needs to be updated. In this case, the satellite needs to update the SSB index corresponding to the beam footprint number, to obtain updated configuration information.

In an example figure (b) shown in FIG. 5, the SSB pattern of the satellite is not bound to the ground. As the satellite moves, an SSB index corresponding to a position of the user equipment changes. For example, at a moment t1, an SSB index corresponding to a position of the user equipment is SSB#17. When the satellite moves, at a moment t2, an SSB index corresponding to a position of the user equipment changes to SSB#16. In this case, the satellite needs to update the SSB index corresponding to the beam footprint number from SSB#17 to SSB#16.

202: The first network device sends the first parameter to the user equipment.

After obtaining the first parameter, the first network device sends the first parameter to the user equipment, where the first parameter includes the physical cell identifier PCI and the offset time. The physical cell identifier PCI indicates a cell in which the user equipment performs SSB measurement, and each physical cell identifier PCI list is corresponding to one type of offset time.

For example, in an example of step 202, after obtaining the first parameter, the serving satellite sends the first parameter to the user equipment. For example, a first parameter "SSB-MTC4" sent by the serving satellite to the user equipment is as follows, where "pci-List" refers to a physical cell identifier list, and "offset" refers to an offset time.

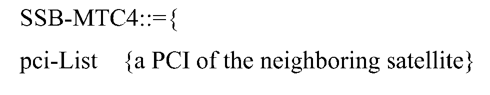

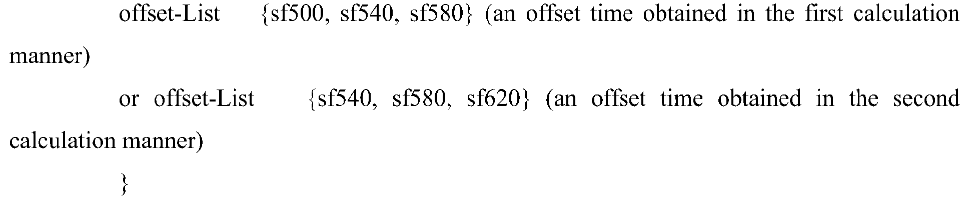

203: The user equipment measures the to-be-measured synchronization signal block SSB of the second network device based on the first parameter.

After receiving the first parameter sent by the first network device, the user equipment calculates the measurement start time based on the first parameter, where the measurement start time indicates a time at which the user equipment starts measuring the to-be-measured SSB of the second network device. The user equipment measures the to-be-measured SSB of the second network device based on the measurement start time.

In a possible implementation, the offset time in the first parameter includes a first offset time, and the first offset time is the offset time calculated in the first calculation manner. In a process in which the user equipment calculates the measurement start time based on the first parameter, the user equipment determines the measurement start time based on the SSB of the first network device and the first offset time, and the SSB of the first network device is an SSB corresponding to an area in which the user equipment is currently located.

For example, in an example of step 203, first offset times in the first parameter that is sent by the serving satellite and that is received by the user equipment are 500 ms, 540 ms, and 580 ms. The first offset time takes SSB#16 (namely, a 40th ms of the measurement period) of the serving satellite corresponding to the user equipment as a reference, and measurement duration of the user equipment is configured as 5 ms. In this case, starting from 40th ms of the measurement period, the user equipment respectively starts measuring, with duration of 5 ms, SSBs of the neighboring satellite for three times respectively at a 500th ms, a 540th ms, and a 580th ms, may obtain SSB#{223, 238, 239, 255} through measuring, and needs to measure a maximum of 24 SSBs.

In a possible implementation, the offset time includes the second offset time, and the second offset time is the offset time calculated in the second calculation manner. In a process in which the user equipment calculates the measurement start time based on the first parameter, the user equipment determines the measurement start time based on the start time of the measurement period and the second offset time. The measurement period is a measurement period shared by the SSB of the first network device and the to-be-measured SSB of the second network device.

In another example of step 203, second offset times in the first parameter that is sent by the serving satellite and that is received by the user equipment are 540 ms, 580 ms, and 620 ms. The second offset time takes the start time of the measurement period as a reference. In this case, starting from 0 ms of the measurement period, the user equipment respectively starts measuring, with duration of 5 ms, SSBs of the neighboring satellite for three times respectively at a 540th ms, a 580th ms, and a 620th ms, and may obtain SSB#{223, 238, 239, 255} through measuring.

It may be learned from the foregoing embodiment that, in this embodiment of this application, the user equipment can determine, based on the first parameter sent by the first network device, the measurement start time at which the user equipment measures the to-be-measured SSB of the second network device, so that the user equipment only needs to start measurement of the to-be-measured SSB of the second network device at the measurement start time. This reduces a quantity of SSBs that the user equipment needs to measure, and reduces SSB measurement overhead of the user equipment during a handover from the first network device to the second network device.

Based on the foregoing method embodiments, an embodiment of this application further provides a measurement processing apparatus. The following specifically describes the measurement processing apparatus provided in this embodiment of this application.

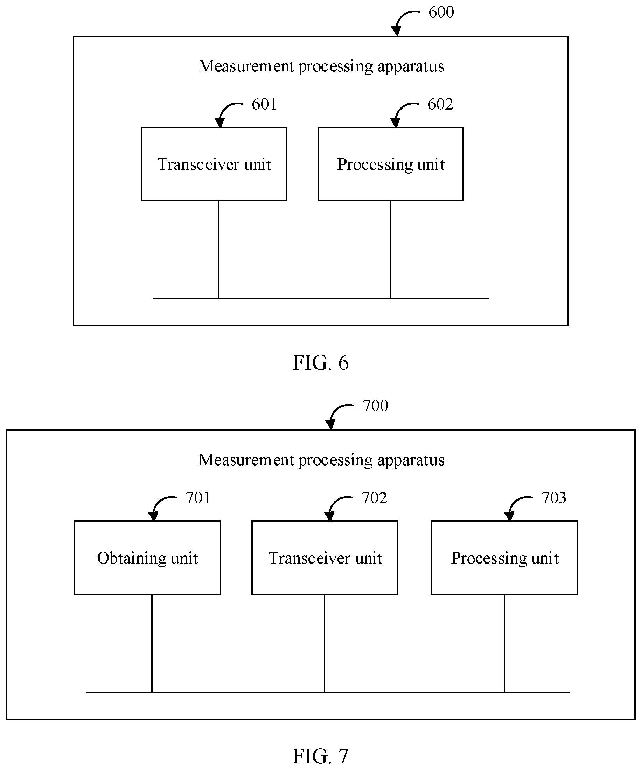

FIG. 6 is a diagram of a structure of a measurement processing apparatus according to an embodiment of this application. In an example shown in FIG. 6, a measurement processing apparatus 600 is configured to implement the steps performed by the user equipment in the foregoing embodiments. The measurement processing apparatus 600 includes a transceiver unit 601 and a processing unit 602.

The transceiver unit 601 is configured to receive a first parameter sent by a first network device, the first parameter is determined based on first configuration information, the first configuration information is used to configure a synchronization signal block SSB index of a second network device in at least one area, and the at least one area includes a coverage area of the second network device. The processing unit 602 is configured to calculate a measurement start time based on the first parameter, and the measurement start time indicates a time at which the user equipment starts measuring a to-be-measured SSB of the second network device. The processing unit 602 is further configured to measure the to-be-measured SSB of the second network device based on the measurement start time.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between the first network device and the second network device.

In a possible implementation, the offset time includes a first offset time, the processing unit 602 is specifically configured to determine the measurement start time based on an SSB of the first network device and the first offset time, and the SSB of the first network device is an SSB corresponding to an area in which the user equipment is currently located.

In a possible implementation, the offset time includes a second offset time, the processing unit 602 is specifically configured to determine the measurement start time based on a start time of a measurement period and the second offset time, and the measurement period is a measurement period shared by an SSB of the first network device and the to-be-measured SSB of the second network device.

FIG. 7 is a diagram of a structure of a measurement processing apparatus according to an embodiment of this application. In an example shown in FIG. 7, a measurement processing apparatus 700 is configured to implement the steps performed by the network device in the foregoing embodiments. The measurement processing apparatus 700 includes an obtaining unit 701, a transceiver unit 702, and a processing unit 703.

The obtaining unit 701 is configured to obtain a first parameter, the first parameter is determined based on first configuration information, the first configuration information is used to configure a synchronization signal block SSB index of a second network device in at least one area, and the at least one area includes a coverage area of the second network device. The transceiver unit 702 is configured to send the first parameter to user equipment, and the first parameter is used to determine a measurement start time for measuring a to-be-measured synchronization signal block SSB of the second network device.

In a possible implementation, the first parameter includes a physical cell identifier PCI and an offset time, the first configuration information includes a beam footprint number of the at least one area, and a mapping relationship between the beam footprint number and an SSB index of the second network device, and the at least one area further includes an overlapping coverage area between a first network device and the second network device.

In a possible implementation, the obtaining unit 701 is specifically configured to receive the first configuration information sent by the second network device, and determine the first parameter based on the first configuration information.

In a possible implementation, the obtaining unit 701 is specifically configured to receive the first parameter sent by the second network device.

In a possible implementation, the transceiver unit 702 is further configured to send second configuration information to the second network device, the second configuration information is used to determine the first parameter, and the second configuration information includes a beam footprint number of an area covered by the first network device, and a mapping relationship between the beam footprint number of the area covered by the first network device and an SSB index of the first network device.

In a possible implementation, the processing unit 703 is further configured to: when the first configuration information changes, update the first parameter based on the first configuration information, and the transceiver unit 702 is further configured to send the updated first parameter to the user equipment.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be separately disposed processing elements, or may be integrated into a chip in the apparatus for implementation. In addition, the units may be stored in a memory in a form of a program, and invoked by a processing element of the apparatus to implement a function of the unit. In addition, all or some of these units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all the embodiments described in this specification are example embodiments, and the related actions are not necessarily mandatory to this application.

Another appropriate step combination that can be figured out by a person skilled in the art based on the content described above also falls within the protection scope of this application. In addition, a person skilled in the art should also know that all embodiments described in this specification are example embodiments, and the related actions are not necessarily mandatory to this application.

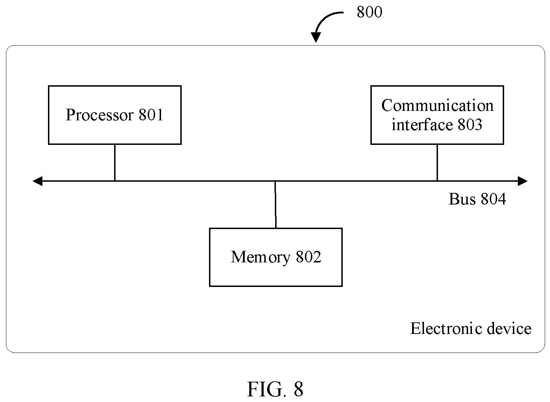

FIG. 8 is a diagram of a structure of an electronic device according to an embodiment of this application. As shown in FIG. 8, the electronic device 800 includes a processor 801, a memory 802, a communication interface 803, and a bus 804. The processor 801, the memory 802, and the communication interface 803 are coupled through the bus (not marked in the figure). The memory 802 stores instructions. When executable instructions in the memory 802 are executed, the electronic device 800 performs the method performed by the user equipment or the network device in the foregoing method embodiments.

The electronic device 800 may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 802 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores executable program code, and the processor 801 executes the executable program code to separately implement functions of the foregoing units or modules, so as to implement the foregoing measurement processing method. In other words, the memory 802 stores instructions used to perform the foregoing measurement processing method.

The communication interface 803 uses a transceiver module, for example, but not limited to, a network interface card or a transceiver, to implement communication between the electronic device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

In another embodiment of this application, a computer-readable storage medium is further provided. The computer-readable storage medium stores computer-executable instructions. When a processor of a device executes the computer-executable instructions, the device performs the method performed by the user equipment or the network device in the foregoing method embodiment.

In another embodiment of this application, a computer program product is further provided. The computer program product includes computer-executable instructions, and the computer-executable instructions are stored in a computer-readable storage medium. When the processor of the device executes the computer-executable instructions, the device performs the method performed by the user equipment or the network device in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the foregoing described apparatus embodiment is merely an example. For example, the unit division is merely logical function division, and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A measurement processing method, applied to user equipment or a chip system of the user equipment, comprising:
receiving a first parameter sent by a first network device, wherein the first parameter is determined based on first configuration information, the first configuration information is used to configure a synchronization signal block SSB index of the second network device in at least one area, and the at least one area comprises a coverage area of the second network device;
calculating a measurement start time based on the first parameter, wherein the measurement start time is used to determine a time at which the user equipment starts measuring a to-be-measured SSB of the second network device; and
measuring the to-be-measured SSB of the second network device based on the measurement start time.

2. The method according to claim 1, wherein the first parameter comprises a physical cell identifier PCI and an offset time, the first configuration information comprises a beam footprint number of the at least one area, and a mapping relationship between the beam footprint number and an SSB index of the second network device, and the at least one area further comprises an overlapping coverage area between the first network device and the second network device.

3. The method according to claim 2, wherein the offset time comprises a first offset time, and calculating, by the user equipment, the measurement start time based on the first parameter comprises:
determining the measurement start time based on an SSB of the first network device and the first offset time, wherein the SSB of the first network device is an SSB corresponding to an area in which the user equipment is currently located.

4. The method according to claim 2, wherein the offset time comprises a second offset time, and calculating, by the user equipment, the measurement start time based on the first parameter comprises:
determining the measurement start time based on a start time of the measurement period and the second offset time, wherein the measurement period is a measurement period shared by an SSB of the first network device and the to-be-measured SSB of the second network device.

5. A measurement processing method, applied to a first network device or a chip system of the first network device and comprising:
obtaining a first parameter, wherein the first parameter is determined based on first configuration information, the first configuration information is used to configure a synchronization signal block SSB index of a second network device in at least one area, and the at least one area comprises a coverage area of the second network device; and
sending the first parameter to the user equipment, wherein the first parameter is used to determine a measurement start time for measuring a to-be-measured synchronization signal block SSB of the second network device.

6. The method according to claim 5, wherein the first parameter comprises a physical cell identifier PCI and an offset time, the first configuration information comprises a beam footprint number of the at least one area, and a mapping relationship between the beam footprint number and an SSB index of the second network device, and the at least one area further comprises an overlapping coverage area between the first network device and the second network device.

7. The method according to claim 5 or 6, wherein obtaining, by the first network device, the first parameter comprises:
receiving the first configuration information sent by the second network device; and
determining the first parameter based on the first configuration information.

8. The method according to claim 5 or 6, wherein obtaining, by the first network device, the first parameter comprises:
receiving the first parameter sent by the second network device.

9. The method according to claim 8, wherein before the first network device receives the first parameter sent by the second network device, the method further comprises:
sending second configuration information to the second network device, wherein the second configuration information is used to determine the first parameter, and the second configuration information comprises a beam footprint number of an area covered by the first network device, and a mapping relationship between the beam footprint number of the area covered by the first network device and an SSB index of the first network device.

10. The method according to any one of claims 5 to 9, wherein the method further comprises:
when the first configuration information changes, updating the first parameter based on the first configuration information, and sending the updated first parameter to the user equipment.

11. A measurement processing apparatus, applied to user equipment or a chip system of the user equipment, wherein the measurement apparatus comprises:
a transceiver unit, configured to receive a first parameter sent by a first network device, wherein the first parameter is determined based on first configuration information, the first configuration information is used to configure a synchronization signal block SSB index of the second network device in at least one area, and the at least one area comprises a coverage area of the second network device; and
a processing unit, configured to calculate a measurement start time based on the first parameter, wherein the measurement start time is used to determine a time at which the user equipment starts measuring a to-be-measured SSB of the second network device, wherein
the processing unit is further configured to measure the to-be-measured SSB of the second network device based on the measurement start time.

12. The apparatus according to claim 11, wherein the first parameter comprises a physical cell identifier PCI and an offset time, the first configuration information comprises a beam footprint number of the at least one area, and a mapping relationship between the beam footprint number and an SSB index of the second network device, and the at least one area further comprises an overlapping coverage area between the first network device and the second network device.

13. The apparatus according to claim 12, wherein the offset time comprises a first offset time, and the processing unit is specifically configured to:
determine the measurement start time based on an SSB of the first network device and the first offset time, wherein the SSB of the first network device is an SSB corresponding to an area in which the user equipment is currently located.

14. The apparatus according to claim 12, wherein the offset time comprises a second offset time, and the processing unit is specifically configured to:
determine the measurement start time based on a start time of the measurement period and the second offset time, wherein the measurement period is a measurement period shared by an SSB of the first network device and the to-be-measured SSB of the second network device.

15. A measurement processing apparatus, applied to a first network device or a chip system of the first network device and comprising:
an obtaining unit, configured to obtain a first parameter, wherein the first parameter is determined based on first configuration information, the first configuration information is used to configure a synchronization signal block SSB index of a second network device in at least one area, and the at least one area comprises a coverage area of the second network device; and
a transceiver unit, configured to send the first parameter to the user equipment, wherein the first parameter is used to determine a measurement start time for measuring a to-be-measured synchronization signal block SSB of the second network device.

16. The apparatus according to claim 15, wherein the first parameter comprises a physical cell identifier PCI and an offset time, the first configuration information comprises a beam footprint number of the at least one area, and a mapping relationship between the beam footprint number and an SSB index of the second network device, and the at least one area further comprises an overlapping coverage area between the first network device and the second network device.

17. The apparatus according to claim 15 or 16, wherein the obtaining unit is specifically configured to:
receive the first configuration information sent by the second network device; and
determine the first parameter based on the first configuration information.

18. The apparatus according to claim 15 or 16, wherein the obtaining unit is specifically configured to:
receive the first parameter sent by the second network device.

19. The apparatus according to claim 18, wherein the transceiver unit is further configured to:
send second configuration information to the second network device, wherein the second configuration information is used to determine the first parameter, and the second configuration information comprises a beam footprint number of an area covered by the first network device, and a mapping relationship between the beam footprint number of the area covered by the first network device and an SSB index of the first network device.

20. The apparatus according to any one of claims 15 to 19, wherein the processing unit is further configured to:
when the first configuration information changes, update the first parameter based on the first configuration information, and the transceiver unit is further configured to send the updated first parameter to the user equipment.

21. An electronic device, comprising a processor, wherein the processor is coupled to a memory, the processor is configured to store instructions, and when the instructions are executed by the processor, the electronic device is enabled to perform the method according to any one of claims 1 to 4, or the electronic device is enabled to perform the method according to any one of claims 5 to 10.

22. A computer-readable storage medium, wherein the computer-readable storage medium stores instructions, and when the instructions are executed, a computer is enabled to perform the method according to any one of claims 1 to 4, or the computer is enabled to perform the method according to any one of claims 5 to 10.

23. A computer program product, wherein the computer program product comprises instructions, and when the instructions are executed, a computer is enabled to perform the method according to any one of claims 1 to 4, or the computer is enabled to perform the method according to any one of claims 5 to 10.
